# FASCICULE DE BREVET EUROPEEN

(11) **EP 0 888 973 B1**
(45) Date de publication et mention de la délivrance du brevet: **17.09.2003**
(21) Numéro de dépôt: 98401650.1
(22) Date de dépôt: 02.07.1998
(51) Int. Cl.: B65D 33/22, C08J 5/12

(54) **Procédé de réalisation de film et/ou sachet à l'aide d'un film en polypropylène ou copolymère muni d'un profilé, film et sachet obtenus**
Verfahren zur Herstellung einer Folie oder eines Beutels mittels einer mit einem Profil versehenen Folie aus Polypropylen Homopolymer oder Copolymer und dadurch hergestellte Folie und hergestellter Beutel
Method for manufacturing a film and/or a bag using a polypropylene homopolymer or copolymer film provided with a profile, film and bag so obtained

(30) Priorité: 04.07.1997 FR 9708493
(43) Date de publication de la demande: 07.01.1999
(73) Titulaire: FLEXICO-FRANCE, 60119 Henonville (FR)
(72) Inventeur: Bois, Henri, 92200 Neuilly sur Seine (FR)
(74) Mandataire: Texier, Christian

(56) Documents cités:
- WO-A-95/09212
- US-A- 4 464 157
- US-A- 5 486 051
- DATABASE WPI Section Ch, Week 7822 Derwent Publications Ltd., London, GB; Class A17, AN 78-39269A XP002059100 & JP 53 043734 A (MITSUI PETROCHEM IND CO LTD), 20 avril 1978

## Description

La présente invention concerne le domaine des sachets d'emballage réalisés à l'aide de film en matière plastique.

Plus précisément, la présente invention concerne les sachets réalisés à l'aide d'un film de polypropylène ou d'un copolymère du polypropylène ou pour simplifier: film de (co) polypropyléne.

La présente invention a pour but de permettre la réalisation de sachets à base d'un tel film comportant au moins un profilé rajouté, tel qu'un profilé de fermeture.

Jusqu'ici, l'homme de l'art n'a pas su réaliser de tels sachets comportant au moins un profilé, en utilisant un film de propylène En effet, la liaison profilé/film polypropylène ou copolymère s'est avérée très délicate car les points de fusion et de ramolissement des polymères composant ces éléments sont voisins.

Le document US-A-5486051 décrit un agencement de profilés de fermeture réalisé au moins en partie par extrusion.

Le document W095/09212 décrit un mélange adhésif à base de polyoléfines.

Le but précité est atteint dans le cadre de la présente invention grâce à un procédé comprenant les étapes consistant à déposer à l'état fondu une couche intermédiaire d'un matériau servant de liant entre un film de (co) polypropylène et un profilé, au niveau du site de liaison du profilé au film.

Dans le cadre de la présente invention, la couche intermédiaire précitée est constituée de préférence d'un mélange de polyéthylène et d'un polyéthylène greffé avec un agent conférant des propriétés de liaison avec des polymères, tels que l'anhydride maléique.

La présente invention concerne également les sachets qui peuvent être obtenus par la mise en oeuvre de ce procédé.

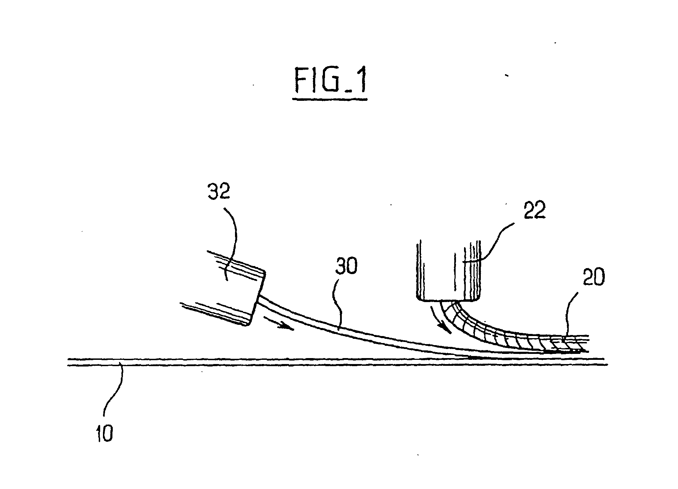

D'autres caractéristiques, buts et avantages de l'invention apparaîtront à la lecture de la description détaillée qui va suivre, et en regard du dessin annexé, donné à titre d'exemple non limitatif et sur lequel la figure unique représente une vue schématique d'un procédé de dépôt d'une couche intermédiaire de liaison conforme à la présente invention.

On aperçoit sur la figure annexée, un film support solide en (co) polypropylène mono ou biorienté 10 et un profilé 20 destiné à être déposé sur ce support 10.

Selon la figure annexée, le profilé 20 est réalisé par extrusion en sortie d'une filière 22, au niveau du site de liaison sur le support 10.

Ainsi, en sortie de la filière 22, le profilé 20 se présente à l'état semi fondu.

Cependant, dans le cadre de l'invention, on peut envisager également d'utiliser un profilé 20, solide, réalisé antérieurement, et acheminé sur le film support 10 par tout moyen approprié, par exemple directement en provenance d'une réserve sous forme d'une bobine.

Le profilé 20 peut faire l'objet de diverses variantes. Il peut s'agir par exemple de profilés de fermeture complémentaires mâle/femelle, de cordons facilitant l'ouverture ultérieure d'un sachet ou encore de liserés de décoration,

Le profilé 20 est de préférence réalisé en polyéthylène. Il peut cependant être réalisé avec d'autres polyoléfines.

Comme on l'a indiqué précédemment, la caractéristique essentielle de l'invention consiste à intercaler entre le film support 10 et le profilé 20, au niveau du site de liaison du profilé 20 sur le film 10, une couche intermédiaire 30 à l'état fondu composée d'un matériau servant de liant entre le film support 10 et le profilé 20.

La couche intermédiaire 30 est de préférence extrudée in situ en sortie d'une filière 32. La couche intermédiaire 30 est de préférence constituée d'un mélange de polyéthylène et d'un polyéthylène greffé avec un agent de liaison tel que l'anhydride maléique. Il peut s'agir par exemple du polymére greffé avec de l'anhydride maléique commercialisé par la Société MITSUI sous la dénomination ADMER ou encore du produit commercialisé par la Société ATO sous la dénomination OREVAC.

Le mélange de polyéthylène et d'un polyéthylène greffé peut prendre des proportions variables, comprises de préférence entre 20% de polyéthylène pour 80% en masse de polyéthylène greffé d'une part, et 80% de polyéthylène pour 20% de polyéthylène greffé d'autre part.

La présente invention propose ainsi un procédé de réalisation de films en polypropylène mono ou biorientés munis de profilés, notamment de profilés de fermeture, qui peuvent être utilisés par exemple sur des machines de remplissage automatique, par exemple dans le domaine des produits alimentaires tels que viennoiserie, biscuiterie, confiserie et salade

Les mêmes films permettent également la réalisation de sachets sur des machines traditionnelles de confection pour les mêmes marchés, mais selon des modes de remplissage plus traditionnels, manuels ou semi-automatiques.

Bien entendu la présente invention n'est pas limitée au mode de réalisation particulier qui vient d'être décrit,

## Revendications

1. Procédé de réalisation d'un film ou d'un sachet comportant au moins un profilé, lequel film ou sachet est en (co) polypropylène, **caractérisé par le fait que** le procédé comprend une étape consistant à déposer à l'état fondu au niveau du site de liaison du profilé (20) au film (10), une couche intermédiaire (30) d'un matériau servant de liant entre le film (10) de (co) polypropylène et le profilé (20).

2. Procédé selon la revendication 1, **caractérisé par le fait que** la couche intermédiaire (30) est constituée d'un mélange de polyéthylène et d'un polyéthylène greffé avec un agent lui conférant des propriétés de liaison avec des polymères.

3. Procédé selon la revendication 2, **caractérisé par le fait que** l'agent est constitué d'anhydride maléique.

4. Procédé selon l'une des revendications 1 à 3, **caractérisé par le fait que** le film de (co) polypropylène est mono ou biorienté.

5. Procédé selon l'une des revendications 1 à 4, **caractérisé par le fait que** le profilé (20) est réalisé par extrusion sur la couche intermediaire (30).

6. Procédé selon l'une des revendications 1 à 4, **caractérisé par le fait que** le profité (20) est déposé à l'état solide sur la couche intermediaire (30).

7. Procédé selon l'une des revendications 1 à 6, **caractérisé par le fait que** le profilé (20) est réalisé en une polyoléfine.

8. Procédé selon l'une des revendications 1 à 7, **caractérisé par le fait que** le profilé (20) est réalisé en polyéthylène.

9. Procédé selon l'une des revendications 1 à 8, **caractérisé par le fait que** le profilé (20) est choisi dans le groupe comprenant les profilés de fermeture complémentaire mâle/femelle, les cordons facilitant l'ouverture d'un sachet et les liserés de décoration.

10. Procédé selon l'une des revendications 1 à 9, **caractérisé par le fait que** la couche intermédiaire (30) est extrudée au niveau du site de liaison avec le film support (10).

11. Procédé selon l'une des revendications 1 à 10, **caractérisé par le fait que** le mélange composant la couche intermédiaire (30) peut varier de 20% en masse de polyéthylène pour 80% de polyéthylène greffé à 80% de polyéthylène pour 20% de polyéthylène greffé.

12. Film en (co) polypropylène muni d'au moins un profilé, qui peut être obtenu par la mise en oeuvre du procédé selon l'une des revendications 1 à 11.

13. Sachet qui peut être obtenu par la mise en oeuvre du procédé selon l'une des revendications 1 à 11 et ou à l'aide du film selon la revendication 12.

## Patentansprüche

1. Verfahren zum Herstellen einer Folie oder eines Beutels mit wenigstens einem Profil, wobei die Folie oder der Beutel aus (Co-) Polypropylen besteht, **dadurch gekennzeichnet, dass** das Verfahren als einen Schritt umfasst, eine Zwischenschicht (30) aus einem Material, das als Bindeglied zwischen der Folie (10) aus (Co-) Polypropylen und dem Profil (20) dient, in geschmolzenem Zustand in Höhe der Verbindung des Profils (20) mit der Folie (10) anzuordnen.

2. Verfahren nach Anspruch 1, **dadurch gekennzeichnet, dass** die Zwischenschicht (30) aus einer Mischung aus Polyethylen und einem Polyethylen, dem ein Stoff zugesetzt wurde, durch den die Eigenschaften der Verbindung mit den Polymeren eingestellt wird, besteht.

3. Verfahren nach Anspruch 2, **dadurch gekennzeichnet, dass** der Stoff ein Maleinanhydrid ist.

4. Verfahren nach einem der Ansprüche 1 bis 3, **dadurch gekennzeichnet, dass** die Folie aus mono- oder biaxial orientiertem (Co-) Polypropylen besteht.

5. Verfahren nach einem der Ansprüche 1 bis 4, **dadurch gekennzeichnet, dass** das Profil (20) durch Extrudieren der Zwischenschicht (30) hergestellt wird.

6. Verfahren nach einem der Ansprüche 1 bis 4, **dadurch gekennzeichnet, dass** das Profil (20) in festem Zustand auf der Zwischenschicht (30) angeordnet wird.

7. Verfahren nach einem der Ansprüche 1 bis 6, **dadurch gekennzeichnet, dass** das Profil (20) aus einem Polyolefin hergestellt wird.

8. Verfahren nach einem der Ansprüche 1 bis 7, **dadurch gekennzeichnet, dass** das Profil (20) aus Polyethylen hergestellt wird.

9. Verfahren nach einem der Ansprüche 1 bis 8, **dadurch gekennzeichnet, dass** das Profil (20) zu einer Gruppe von Profilen mit komplementären männlichen/weiblichen Verschlussprofilen, Schnüren zum Vereinfachen des Öffnens eines Beutels und Dekorationsborten gehört.

10. Verfahren nach einem der Ansprüche 1 bis 9, **dadurch gekennzeichnet, dass** die Zwischenschicht (30) in Höhe der Verbindung mit der Trägerfolie (10) extrudiert wird.

11. Verfahren nach einem der Ansprüche 1 bis 10, **dadurch gekennzeichnet, dass** die Mischung, aus der die Zwischenschicht (30) besteht, zwischen 20 Gew.-% Polyethylen und 80 % Polyethylen mit Zusatz sowie 80 % Polyethylen und 20 % Polyethylen mit Zusatz variieren kann.

12. Folie aus (Co-) Polypropylen mit wenigstens einem Profil, die durch Anwenden des Verfahrens nach einem der Ansprüche 1 bis 11 hergestellt wurde.

13. Beutel, der durch Anwenden des Verfahrens nach einem der Ansprüche 1 bis 11 und/oder mit der Folie nach Anspruch 12 hergestellt wurde.

## Claims

1. A method of making a film and/or a sachet including a section member, which film or sachet is of (co)polypropylene, the method being **characterized by** the fact that it comprises a step consisting in depositing, in the molten state, at the site where the section member (20) is to be bonded to the film (10), an intermediate layer (30) of a material that serves to bind together the section member (20) and the (co)polypropylene film (10).

2. A method according to claim 1, **characterized by** the fact that the intermediate layer (30) is constituted by a mixture of polyethylene and of polyethylene grafted with an agent imparting thereto bonding properties with polymers.

3. A method according to claim 2, **characterized by** the fact that the agent is constituted by maleic anhydride.

4. A method according to any one of claims 1 to 3, **characterized by** the fact that the film of (co)polypropylene has one or two orientations.

5. A method according to any one of claims 1 to 4, **characterized by** the fact that the section member (20) is made by extrusion on the intermediate layer (30).

6. A method according to any one of claims 1 to 4, **characterized by** the fact that the section member (20) is deposited on the intermediate layer (30) in the solid state.

7. A method according to any one of claims 1 to 6, **characterized by** the fact that the section member (10) is made of a polyolefin.

8. A method according to any one of claims 1 to 7, **characterized by** the fact that the section member (20) is made of polyethylene.

9. A method according to any one of claims 1 to 8, **characterized by** the fact that the section member (20) is selected from the group comprising: complementary male/female closure section members, cords for making a sachet easier to open, and decorative strips.

10. A method according to any one of claims 1 to 9, **characterized by** the fact that the intermediate layer (30) is extruded at the site where it is to be bonded with the support film (10).

11. A method according to any one of claims 1 to 10, **characterized by** the fact that the mixture constituting the intermediate layer (30) can vary from 20% by mass polyethylene for 80% grafted polyethylene to 80% polyethylene for 20% grafted polyethylene.

12. A film (20) of polypropylene provided with at least one section member, which film can be obtained by implementing the method of any one of claims 1 to 1 1.

13. A sachet which can be obtained by implementing the method of claim 1 and/or using the film of claim 12.
